(19) Europäisches Patentamt
European Patent Office
Office européen des brevets

(11) EP 1 072 637 A1

(12) # EUROPEAN PATENT APPLICATION

(43) Date of publication:
**31.01.2001 Bulletin 2001/05**

(51) Int. Cl.[7]: **C08K 3/00**, C08L 23/08

(21) Application number: **00116398.9**

(22) Date of filing: **28.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.07.1999 JP 21758799**

(71) Applicants:
- **Sumitomo Chemical Company, Limited**
**Chuo-ku Osaka 541-8550 (JP)**
- **Sumika Plastech Co.,Ltd.**
**Chuo-ku, Tokyo 104-8260 (JP)**

(72) Inventors:
- **Kojima, Tomoki**
**Toyonaka-shi, Osaka (JP)**
- **Sakaya, Taiichi**
**Takatsuki-shi, Osaka (JP)**

(74) Representative:
**VOSSIUS & PARTNER**
**Siebertstrasse 4**
**81675 München (DE)**

(54) **Olefin-based resin composition and formed product comprising the same**

(57) The present invention provides an olefin-based resin composition comprising an olefin-based resin and an inorganic compound particle, wherein the olefin-based resin is a copolymer of ethylene and/or an $\alpha$-olefin and an alkenyl aromatic hydrocarbon and the like.

The present invention relates to olefin-based resin compositions which are suitable for being used as material for resin products which are required to have excellent transparency, and to formed products comprising the same.

EP 1 072 637 A1

## Description

The present invention relates to olefin-based resin compositions which are suitable for being used as material for resin products which are required to have excellent transparency, and to formed products comprising the same.

Heretofore, resin compositions comprising specific olefin-based resins and certain kinds of inorganic compounds are known. For example, olefin-based resin compositions containing inorganic compounds with intrinsic functions such as a radiation-shielding property have been applied to covering films of agricultural houses and the like (see, for example, JP-A- 52-105953).

For example, the covering film of the agricultural house is demanded to be transparent so that one can observe the inside of the agricultural house from the outside. However, films comprising the conventional olefin-based resin compositions containing certain kinds of inorganic compounds which function as a radiation-shielding agent or the like do not always have sufficient transparency. Under these circumstances, olefin-based resin compounds which contain inorganic compounds and which are excellent in transparency have been demanded.

An object of the present invention is to provide an olefin-based resin composition comprising an olefin-based resin and an inorganic compound particle and which is suitable for being used as material for resin products which are required to have excellent transparency such as agricultural films.

This object could be achieved on the basis of the finding that when, in an olefin-based resin composition comprising an olefin-based resin and an inorganic compound particle, a copolymer of ethylene and/or an α-olefin and an alkenyl aromatic hydrocarbon is used as the olefin-based resin, excellent transparency can be attained.

That is, the present invention provides an olefin-based resin composition comprising an olefin-based resin and an inorganic compound particle, wherein the olefin-based resin is a copolymer of ethylene and/or an α-olefin and an alkenyl aromatic hydrocarbon.

This olefin-based resin composition is excellent in transparency and is capable of providing formed products superior in transparency to those obtained from the other and conventional olefin-based resin compositions.

The olefin-based resin composition of the present invention is a resin composition comprising an olefin-based resin and an inorganic compound particle, wherein the olefin-based resin is a copolymer of ethylene and/or an α-olefin and an alkenyl aromatic hydrocarbon.

The olefin-based resin composition of the present invention is characterized by containing, as the olefin-based resin, a copolymer of ethylene and/or an α-olefin and an alkenyl aromatic hydrocarbon (hereinafter, sometimes referred to as the copolymer (A)). Since the composition contains such a copolymer, it is superior in transparency to resin compositions obtained from the other and conventional olefin-based resins. Further, "a copolymer of ethylene and/or an α-olefin and an alkenyl aromatic hydrocarbon" means at least one copolymer selected from the group consisting of an ethylene/α-olefin/alkenyl aromatic hydrocarbon copolymer, an ethylene/alkenyl aromatic hydrocarbon copolymer and an α-olefin/alkenyl aromatic hydrocarbon copolymer.

The amount of the repeating units derived from the alkenyl aromatic hydrocarbon contained in the copolymer (A) may be optionally selected depending on the type of the inorganic compound particle to be used together and on the application of the olefin-based resin composition of the present invention. For example, in the case of compositions for agricultural films which have high transparency and which are excellent in a heat-retaining property (a radiation-shielding property) and in flexibility, the amount of the repeating units derived from the alkenyl aromatic hydrocarbon is preferably from about 5 to about 40 mol%, more preferably from about 10 to about 40 mol%.

The olefin-based resin composition of the present invention contains the inorganic compound particle as an inorganic compound. The inorganic compound particle is the so-called "functional inorganic compound particle" which can exhibit its intrinsic function when it is mixed with the copolymer (A). The function is optional and may be selected depending on the application of the composition and may be e.g. a radiation-shielding function, an ultraviolet-shielding function, a reinforcing function, a function of increasing quantity, an anti-blocking function, a function of providing lubricating property, a gas barrier property or a function of providing easy-tearability.

Therefore, the olefin-based resin composition of the present invention is a composition which possesses a function exhibited by such an inorganic compound particle and which is excellent in transparency. The inorganic compound particle preferably has a volume-based average particle diameter of not greater than 10 μm. When the volume-based average particle diameter exceeds 10 μm, the decrease in the transparency of the composition becomes apparent even if the copolymer of ethylene and/or an α-olefin and alkenyl aromatic hydrocarbon is used as an olefin-based resin. In the present invention, the volume-based average particle diameter of the inorganic compound particle is more preferably from 0.05 to 5 μm, still more preferably from 0.1 to 3 μm, and particularly preferably from 0.2 to 1 μm. In the present invention, the volume-based average particle diameter of the inorganic compound particle means an average particle diameter of the inorganic compound particle in accordance with particle size distribution based on its volume, and is indicated by a value which is obtained by means of a scattering particle size analyzer (manufactured by Horiba Seisakusho Corp., Model LA-910) and which is measured in a manner wherein a 1% aqueous dispersion of a sample is placed into a batch cell and then subjected to ultrasonic treatment for 3 minutes. Further, the specific surface area of

the inorganic compound particle measured by the BET method is preferably from 1 to 30 $m^2/g$, more preferably from 2 to 20 $m^2/g$. The inorganic compound particle may be surface treated with higher fatty acids, alkali metal salts of higher fatty acids or the like for the purpose of improvement in its dispersibility in the composition.

A refraction index difference ($\Delta n$) between the inorganic compound particle and the copolymer (A) is preferably $-0.1 < \Delta n < 0.1$, more preferably $-0.05 < \Delta n < 0.05$, still more preferably $-0.02 < \Delta n < 0.02$, and particularly preferably $-0.01 < \Delta n < 0.01$. The transparency of the composition is improved as the $\Delta n$ approaches zero. The refraction index of the copolymer (A) may be adjusted by, for example, varying the monomer composition of the copolymer. In general, when the proportion of ethylene and/or the $\alpha$-olefin increases, the refraction index becomes smaller. On the other hand, when the proportion of the alkenyl aromatic hydrocarbon is increased, the refraction index becomes greater. Varying the monomer composition of the copolymer (A) may change the refraction index difference ($\Delta n$) between the copolymer and the inorganic compound particle, and may also bring the $\Delta n$ close to zero.

As for the inorganic compound particle in the olefin-based resin composition of the present invention, the type thereof may be optionally selected depending on the application of the composition and the function which the composition is required to have.

For example, in compositions for covering films of e.g. agricultural houses, an inorganic compound particle comprising at least one atom selected from Si, Al, Mg, Ca, Zn, Ti, Ce and Zr is preferably selected. Oxides and hydroxides containing these atoms and complex compounds represented by the following general formulas [I] - [V] may be used as an inorganic compound for the inorganic compound particle.

Specific examples of the inorganic compound include oxides such as magnesium oxide, calcium oxide, aluminum oxide, silicon oxide, titanium oxide, zirconium oxide, cerium oxide and zinc oxide; hydroxides such as lithium hydroxide, magnesium hydroxide, calcium hydroxide and aluminum oxide; complex hydroxides such as lithium aluminum complex hydroxide and hydrotalcite compounds; carbonates such as magnesium carbonate and calcium carbonate; sulfates such as potassium sulfate, magnesium sulfate, calcium sulfate, zinc sulfate and aluminum sulfate; phosphates such as lithium phosphate, sodium phosphate, potassium phosphate and calcium phosphate; silicates such as magnesium silicate, calcium silicate, aluminum silicate and titanium silicate; aluminates such as sodium aluminate, potassium aluminate and calcium aluminate; aluminosilicates such as sodium aluminosilicate, potassium aluminosilicate and calcium aluminosilicate; clay minerals such as kaolin, clay, talc, mica and montmorillonite; and complex oxides. These may be used either alone or in combination of two or more of them.

In particular, in the composition for covering films which is excellent in the heat-retaining property (the radiation-shielding property), an inorganic compound comprising at least one atom selected from Si, Al, Mg, Ca and Zn is preferably used. Particularly preferred are aluminosilicates and complex hydroxides such as hydrotalcite compounds and lithium aluminum complex hydroxide, which exhibit absorbing abilities in wide wavelength ranges.

The hydrotalcite compounds are compounds represented by the following formula (I):

$$M^{2+}{}_{(1-x)}Al^{3+}{}_{x}(OH^-)_2(A_1{}^{n-})_{x/n} \cdot mH_2O \qquad (I)$$

wherein $M^{2+}$ is a divalent metal ion, $A_1{}^{n-}$ is an n-valent anion, and x, m and n satisfy conditions of $0<x<0.5$, $0\leq m\leq 2$ and $1\leq n$. The $M^{2+}$ may be $Mg^{2+}$, $Ca^{2+}$, $Zn^{2+}$ and the like. The n-valent anion is not particularly limited and may be anions such as $Cl^-$, $Br^-$, $I^-$, $NO_3^-$, $ClO_4^-$, $SO_4^{2-}$, $CO_3^{2-}$, $SiO_3^{2-}$, $HPO_4^{3-}$, $HBO_4^{3-}$, $PO_4^{3-}$, $Fe(CN)_6^{3-}$, $Fe(CN)_6^{4-}$, $CH_3COO^-$, $C_6H_4(OH)COO^-$, $(COO)_2^{2-}$, a terephthalate ion and a naphthalenesulfonate ion, and a polysilicate ion and a polyphosphate ion which are disclosed in JP-A- 8-217912.

Typically, examples thereof include natural hydrotalcite and synthetic hydrotalcite such as DHT-4A (trade name, manufactured by Kyowa Chemical Industries, Ltd.; $Mg^{2+}{}_{0.69}Al^{3+}{}_{0.31}(OH^-)_2 \cdot (CO_3{}^{2-})_{0.155} \cdot 0.54H_2O$)

The hydrotalcite compounds may be used together with calcium aluminum complex hydroxide, $CaAl_x(OH)_{(2+3x)}$, or calcium hydroxide.

Examples of the Lithium aluminum complex hydroxides include compounds which are disclosed in JP-A- 5-179052 and which are represented by the following formula (II):

$$Li^+(Al^{3+})_2(OH^-)_6 \cdot (A_2{}^{n-})_{1/n} \cdot mH_2O \qquad (II)$$

wherein $A_2{}^{n-}$ is an n-valent anion, and m and n satisfy conditions of $0\leq m\leq 3$ and $1\leq n$. The n-valent anion is not particularly limited and may be anions similar to $A_1{}^{n-}$ in the compounds of formula (I).

Complex hydroxides other than the above-mentioned two kinds may be, for example, complex hydroxides which have a hydroxyl group and which contain Li, Al and at least one element selected from alkaline earth metals, transition metals, Zn and Si. Among the alkaline earth metals, Mg and Ca are preferred. Among the transition metals, di-or trivalent Fe, Co, Ni and Mn, particularly Fe, are preferred. The molar ratio of Al to Li (Al/Li) is usually from 1.5/1 to 2.5/1, preferably from 1.8/1 to 2.5/1.

The molar ratio (a), based on one mole of Li, of the element selected from alkaline earth metals, transition

metals, Zn and Si usually satisfies $0<a<1.5$, preferably $0.1\leq a\leq 1.4$, more preferably $0.2\leq a\leq 1.2$.

The anionic part other than a hydroxyl group in such complex hydroxides may be, for example, polysilicate ions such as a pyrosilicate ion, a cyclosilicate ion, an isosilicate ion, a phillosilicate ion, a tectsilicate ion; inorganic acid ion such as a carbonate ion, a halide ion, a sulfate ion, a sulfite ion, a nitrate ion, a nitrite ion, a phosphate ion, a phosphite ion, a hypophosphite ion, a polyphosphate ion, an aluminate ion, a silicate ion, a perchlorate ion and a borate ion; anionic transition metal complexes such as $Fe(CN)_6^{3-}$ and $Fe(CN)_6^{4-}$; organic acid ions such as an acetate ion, a benzoate ion, a formate ion, a terephthalate ion and an alkylsulfonate ion. Among them, the carbonate ion, the halide ion, the sulfate ion, the phosphate ion, the polyphosphate ion, the silicate ion, the polysilicate ions and the perchlorate ion are preferred. Particularly preferred are the carbonate ion, the polyphosphate ion, the silicate ion and the polysilicate ions.

Typically, examples of such complex hydroxides include a complex hydroxide which contains Al, Li and Mg and which has a molar ratio (Al/Li/Mg) of about 2.3/1/0.28 (trade name: LMA, manufactured by Fuji Chemical Co., Ltd.) and a complex hydroxide which contains Al, Li and Si and which has a molar ratio (Al/Li/Si) of about 2/1/1.2 (trade name : FUJIREIN LS, manufactured by Fuji Chemical Co., Ltd. ; volume-based average particle diameter = 0.9 μm; specific surface area measured by the BET method = 9 $m^2$/g).

Compounds which are disclosed in WO97/00828 and are represented by formula (III):

$$[(Li^{+}_{(1-x)}M^{2+}_{x})(Al^{3+})_2(OH^{-})_6]_2(Si_yO_{(2y+1)}{}^{2-})_{(1+x)} \cdot mH_2O \qquad (III)$$

wherein $M^{2+}$ is a divalent metal and m, x and y satisfy conditions of $0\leq m<5$, $0\leq x<1$ and $2\leq y\leq 4$, and compounds which are disclosed in JP-A- 8-217912 and are represented by formula (IV):

$$[(Li^{+}_{(1-x)}M^{2+}_{x})(Al^{3+})_2(OH^{-})_6]_2(A^{n-})_{2(1+x)/n} \cdot mH_2O \qquad (IV)$$

wherein $M^{2+}$ is a divalent metal, $A^{n-}$ is an n-valent anion and m, x and n satisfy conditions of $0\leq m<5$, $0.01\leq x<1$ and $1\leq n$ are preferable examples of the complex oxide described above. The $M^{2+}$ in formulas (III) and (IV) may be $Mg^{2+}$, $Ca^{2+}$, $Zn^{2+}$ and the like.

Further, a basic aluminum carbonate complex salt represented by formula (V):

$$mAl_2O_3 \cdot (n/p)M_{2/p}O \cdot X \cdot kH_2O \qquad (V)$$

wherein X is a carbonate anion, M is an alkali metal or an alkaline earth metal, p is a valence number of the metal M, and m, n and k satisfy conditions of $0.3\leq m\leq 1$, $0.3\leq n\leq 2$ and $0.5\leq k\leq 4$, may also be preferably used as the inorganic compound particle in the present invention.

A complex salt represented by formula (V) wherein X is an inorganic anion derived, for example, from an oxyacid of sulfur such as sulfuric acid and sulfurous acid, an oxyacid of nitrogen such as nitric acid and nitrous acid, hydrochloric acid, an oxyacid of chlorine such as perchloric acid, an oxyacid of phosphorous such as phosphoric acid, phosphorous acid and metaphosphoric acid, or an organic ion derived, for example, from acetic acid, propionic acid, adipic acid, benzoic acid, phthalic acid, terephthalic acid, maleic acid, fumaric acid, succinic acid, p-oxybenzoic acid, salicylic acid, picric acid and toluenesulfonic acid may be used together with the above-mentioned basic aluminum carbonate complex salt.

The olefin-based resin composition of the present invention may comprise supplementary additional ingredients, which are usually used in the resin composition field, such as an antioxidant, a heat stabilizer, a light stabilizer, a dispersant, a lubricant, an anti-blocking agent, a pigment, a colorant, an anti-sticking agent, an antistatic agent, an ultraviolet absorber, an antifogging agent in such an amount that performance depending on the application of the composition can be secured. As for the supplementary additional ingredients, see "Technique of separation and analysis of polymer additives", Tanaka et al., 1987, published by Nippon Kagaku Joho Co., Ltd. and "Handbook of additives for plastics and rubber", Goto, 1970, Kagaku Kogyo Co., Ltd. These supplementary additional ingredients may be used either alone or in combination of two or more of them.

There is no particular limitation in the content of the inorganic compound particle in the olefin-based resin composition of the present invention. The content may optionally be selected so that performance depending on the application of the composition can be secured. The olefin-based resin composition of the present invention has transparency superior to that of the other and conventional olefin-based resin composition which contains the same inorganic compound particle in the same amount as the olefin-based resin composition of the present invention. Typically, examples of the content of the inorganic compound particle in the olefin-based resin composition of the present invention may include from 1 to 400 parts by weight of the inorganic compound particle per 100 parts by weight of the copolymer (A). In particular, it is the noteworthy feature of the olefin-based resin composition of the present invention that the composition can maintain its excellent transparency even if it contains from 10 to 400 parts by weight of the inorganic

compound particle per 100 parts by weight of the copolymer (A). The known composition comprising a certain kind of inorganic compound and an olefin-based resin such as an ethylene/vinyl acetate copolymer has poor transparency even if it contains less than 10 parts by weight of the inorganic compound per 100 parts by weight of the resin. Contrary to this, since the olefin-based resin composition of the present invention comprises the copolymer (A) of ethylene and/or an α-olefin and an alkenyl aromatic hydrocarbon, it has excellent transparency even if it contains not less than 10 parts by weight, or even not less than 20 parts by weight of the inorganic compound particle per 100 parts by weight of the copolymer (A). In such a case, it is important that an inorganic compound is composed of a fine particle previously described in addition to the combination of the copolymer (A) and an inorganic compound. For example, the inorganic compound particle has a volume-based average particle diameter of not greater than 10 μm. In addition to this, when a specific surface area of the inorganic compound particle measured by the BET method is from 1 to 30 $m^2/g$, a better effect can be obtained.

The olefin-based resin composition of the present invention may be prepared in the same procedure as that for producing the other and conventional resin compositions, which comprises the steps of adding a predetermined amount of the inorganic compound particle to the copolymer (A), further adding, as necessary, various kinds of supplementary additional ingredients, and mixing and kneading the mixture in a mixing and kneading machine such as a ribbon blender, a super mixer, a Banbury mixer and a single or double screw extruder.

Next, the olefin-based resin in the olefin-based resin composition of the present invention will be described.

The olefin-based resin is a copolymer of ethylene and/or an α-olefin and an alkenyl aromatic hydrocarbon (i.e. the copolymer (A)).

As the α-olefin in the copolymer (A), α-olefins having from 3 to 20 carbon atoms are preferred. Typically, examples thereof include linear α-olefins such as propylene, butene-1, pentene-1, hexene-1, heptene-1, octene-1, nonene-1 and decene-1, branched α-olefins such as 3-methylbutene-1, 3-methylpentene-1, 4-methylpentene-1 and 5-methyl-hexene-1 and vinylcyclohexane. Particularly preferred α-olefins are propylene, butene-1, pentene-1, hexene-1, heptene-1, octene-1, 4-methylpentene-1 and vinylcyclohexane. Among them, propylene is particularly preferred.

As the alkenyl aromatic hydrocarbon in the copolymer (A), alkenyl aromatic hydrocarbons having an aromatic hydrocarbon group with from 6 to 25 carbon atoms. Typically, examples of the aromatic hydrocarbon group include a phenyl group, a tolyl group, a xylyl group, a tert-butylphenyl group, a vinylphenyl group, a naphthyl group, a phenanthryl group and an anthracenyl group. The phenyl group, the tolyl group, the xylyl group, the tert-butylphenyl group, the vinylphenyl group and the naphthyl group are particularly preferred.

Typically, examples of the alkenyl aromatic hydrocarbon include styrene, alkylstyrenes such as p-methylstyrene, m-methylstyrene, o-methylstyrene, p-ethylstyrene, m-ethylstyrene, o-ethylstyrene, 2,4-dimethylstyrene, 2,5-dimethylstyrene, 3,4-dimethylstyrene, 3,5-dimethylstyrene, 3-methyl-5-ethylstyrene, p-tert-butylstyrene and p-sec-butylstyrene; alkenylbenzenes such as 2-phenylpropylene and 2-phenylbutene; and vinylnaphthalenes such as 1-vinylnaphthalene. Among these alkenyl aromatic compounds, styrene, p-methylstyrene, m-methylstyrene, o-methylstyrene, p-tert-butylstyrene, 2-phenylpropylene and 1-vinylnaphthalene are preferred, and styrene is particularly preferred.

When the copolymer (A) comprises at least one copolymer substantially having no crystallinity, the composition of the present invention becomes to have better transparency. Therefore, it is preferable that copolymer (A) comprises at least one copolymer substantially having no crystallinity. The copolymer substantially having no crystallinity is, for example, a copolymer substantially showing no peak in an endothermic curve (a DSC chart) obtained by means of a differential scanning calorimeter.

As the copolymer substantially having no crystallinity, copolymers (i.e. ethylene/alkenyl aromatic hydrocarbon copolymers) having a ratio of the area of the peak appearing in the range of from 34.0 ppm to 36.0 ppm in a $^{13}C$-NMR spectrum to that of the peak appearing in the range of from 36.0 ppm to 38.0 ppm of from 0.01 to 0.25 are also preferred. The ethylene/alkenyl aromatic hydrocarbon copolymers having such physical properties have an atactic structure. Compositions comprising such copolymers have improved transparency.

When the copolymer (A) comprises at least one copolymer whose repeating units derived from the alkenyl aromatic hydrocarbon substantially having no stereoregularity, the composition of the present invention becomes to have better transparency and better flexibility. Therefore, it is preferable that the copolymer (A) comprises at least one copolymer whose repeating units derived from the alkenyl aromatic hydrocarbon substantially have no stereoregularity. The fact that the repeating units derived from the alkenyl aromatic hydrocarbon in the copolymer substantially have no stereoregularity may be confirmed from a $^{13}C$-NMR spectrum measurement which detected a signal corresponding to a methylene group (Sαβ, Sββ) as multiplet.

Further, when the copolymer (A) comprises at least one copolymer which has a loss tangent (tan δ) whose maximum value, X, and a fraction, S (mol%), of the repeating units derived from the alkenyl aromatic hydrocarbon satisfy formula (1), the composition of the present invention becomes to have better flexibility. Therefore, the copolymer (A) preferably comprises at least one copolymer which has a loss tangent (tan δ) whose maximum value, X, and a fraction, S (mol%), of the repeating units derived from the alkenyl aromatic hydrocarbons satisfy formula (1). Ones satisfy formula (2) are particularly preferred.

$$X > -0.0005 \times S^2 + 0.06 \times S + 0.04 \quad (1)$$

$$X > -0.0005 \times S^2 + 0.06 \times S + 0.17 \quad (2)$$

In formulas (1) and (2), tan δ indicates a ratio (E"/E') of a loss elastic modulus (E") to a storing elastic modulus (E') obtained by the measurement of solid dynamic viscoelasticity under the conditions of a frequency at 5 Hz, a rate of temperature elevation at 2°C/minute and a displacement amplitude at 10 μm using a 20 mm × 3.0 mm × 0.3 mm pressed sheet.

There is no particular limitation in the process for producing the copolymer of ethylene and/or an α-olefin and an alkenyl aromatic hydrocarbon in the present invention. There may be applied various kinds of methods, for example, a gas phase polymerization in a batch or continuous system, a bulk polymerization method, a solution or slurry polymerization method using an adequate solvent. As a polymerization catalyst, for example, Ziegler catalysts and metallocene-based catalysts disclosed in JP-A-3-250007, JP-A-7-70223, JP-A-9-309925, JP-A-9-87313, JP-A-9-183809 and WO 98/09999 may be used, but the catalyst is not restricted to these ones. In the polymerization, a chain transfer agent such as hydrogen may be used for the purpose of the adjustment of a molecular weight of the copolymer.

The copolymer (A) in the olefin-based resin composition of the present invention may be produced by using, for example, a catalyst prepared from the following (B) and (C) and/or (D).

(B): The transition metal complex represented by the following general formulas [I], [II] or [III]:

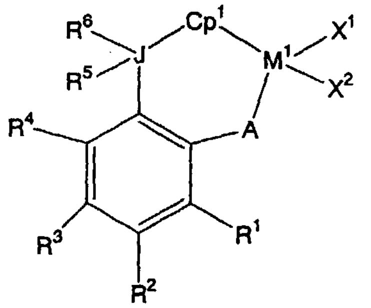

[I]

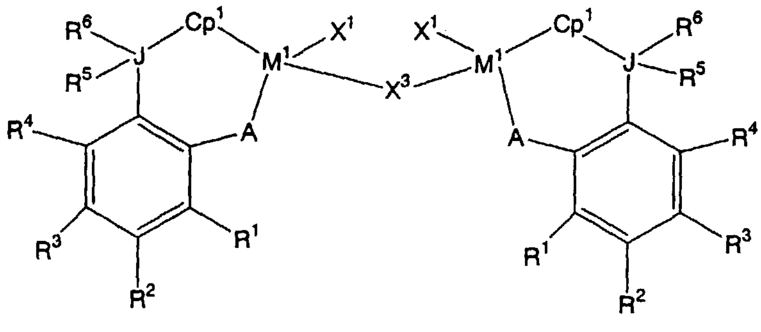

[II]

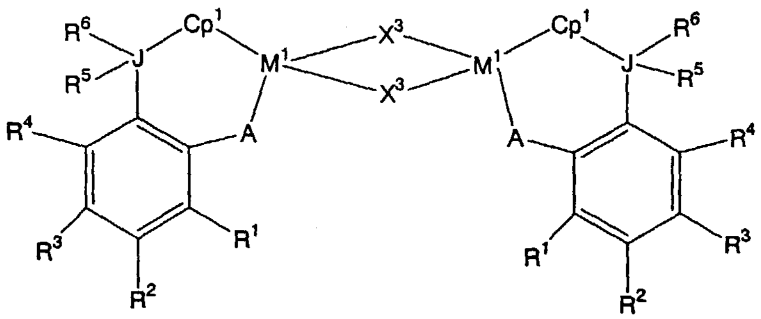

[ III ]

In the general formulas [I], [II] and [III], $M^1$ represents a transition metal atom of Group 4 of the Periodic Table of Elements, A represents an atom of Group 16 of the Periodic Table of Elements, J represents an atom of Group 14 of the Periodic Table of Elements, and $Cp^1$ represents a group having a cyclopentadiene-type anion skeleton. $X^1$, $X^2$, $R^1$, $R^2$, $R^3$, $R^4$, $R^5$ and $R^6$ independently represent a hydrogen atom, a halogen atom, an alkyl group, an aralkyl group, an aryl group, a substituted silyl group, an alkoxy group, an aralkyloxy group, an aryloxy group or a di-substituted amino group. $X^3$ represents an atom of Group 16 of the Periodic Table of Elements. $R^1$, $R^2$, $R^3$, $R^4$, $R^5$ and $R^6$ may arbitrarily be combined to form a ring. The two $M^1$s, As, Js, $Cp^1$s, $X^1$s, $X^2$s, $X^3$s, $R^1$s, $R^2$s, $R^3$s, $R^4$s, $R^5$s or $R^6$s in the general formula [II] or [III] may be either the same or different.

(C): At least one aluminum compound selected from the following (C1) to (C3):

(C1) An organoaluminum compound represented by the general formula $E^1{}_aAlZ_{3-a}$
(C2) A cyclic aluminoxane having a structure represented by the general formula $\{—Al(E^2)—O—\}_b$
(C3) A linear aluminoxane having a structure represented by the general formula $E^3\{—Al(E^3)—O—\}_cAlE^3{}_2$

In the above general formulas, $E^1$, $E^2$ and $E^3$ each indicates a hydrocarbon group, and all $E^1$s, all $E^2$s and all $E^3$s may be either the same or different. Z represents a hydrogen atom or a halogen atom and all Zs may be either the same or different. The character "a" represents a number satisfying $0 < a \leq 3$, b represents an integer not smaller than 2, and c represents an integer not smaller than 1.

(D): A boron compound selected from the following (D1) to (D3):

(D1) A boron compound represented by the general formula $BQ^1Q^2Q^3$
(D2) A boron compound represented by the general formula $G^+(BQ^1Q^2Q^3Q^4)^-$
(D3) A boron compound represented by the general formula $(L—H)^+(BQ^1Q^2Q^3Q^4)^-$

In the general formulas, B represents a trivalent boron atom, $Q^1$ to $Q^4$ each represents a halogen atom, a hydrocarbon group, a halogenated hydrocarbon group, a substituted silyl group, an alkoxy group or a di-substituted amino group and may be either the same or different, $G^+$ is an inorganic or organic cation, L is a neutral Lewis base, and $(L—H)^+$ is a Brensted acid.

(B) Transition metal complex

The transition metal complex represented by the general formula [I] may be prepared, for example, by the method disclosed in WO97/03992-A. The transition metal complexes represented by the general formulas [II] and [III], respectively, may be prepared by reacting the transition metal complex represented by the general formula [I] with water in amounts of 0.5 molar time and 1 molar time that of the transition metal complex [I]. In their preparation, there may be applied, for example, a method wherein the transition metal complex represented by the general formula [I] is directly reacted with a required amount of water and a method wherein the transition metal complex represented by the general

formula [I] is put into a dry solvent such as hydrocarbons and is further passed through an inert gas and the like containing a required amount of water.

(C) Aluminum compound

Examples of the aluminum compound (C) include triethylaluminum, triisobutylaluminum, methylaluminoxane and other alkylaluminoxanes.

(D) Boron compound

Examples of the boron compound (D) include triphenylmethyl tetrakis(pentafluorophenyl)borate, tri(n-butyl)ammonium tetrakis(pentafluorophenyl)borate and N,N-dimethylanilinium tetrakis(pentafluorophenyl)borate.

The ethylene and/or an $\alpha$-olefin and alkenyl aromatic hydrocarbon copolymer may be obtained by copolymerizing ethylene and an alkenyl aromatic hydrocarbon by using an olefin-polymerizing catalyst prepared from the transition metal complex (B) and the (C) and/or the (D). When an olefin-polymerization catalyst prepared from the two components, (B) and (C), the cyclic aluminoxane (C2) and/or the linear aluminoxane (C3) are preferable as the (C). Other preferable olefin-polymerization catalysts include ones prepared from the (B), the (C) and the (D). In this case, the (C1) is readily used as the (C).

As for the amount of these components to be used, it is usually preferable that each component is used so that a molar ratio (C)/(B) is in the range of from 0.1 to 10000, preferably from 5 to 2000 and a molar ratio (D)/(B) is in the range of from 0.01 to 100, preferably from 0.5 to 10.

The olefin-based resin composition of the present invention may contain olefin resins other than those described above unless the effect based on the use of the copolymer (A) is considerably damaged.

The olefin-based resin composition of the present invention may be processed into various kinds of molded products, such as a film and a sheet.

For example, the olefin-based resin composition of the present invention may be shaped into a film by e.g. the T-die film forming method or the inflation film forming method. This film may be either a monolayer film comprising the olefin-based resin composition of the present invention or a multilayer film having at least one layer comprising the olefin-based resin composition of the present invention. Such a multiplayer film may be produced by e.g. a co-extrusion T-die film forming method. The olefin-based resin composition of the present invention may also be applied to a monolayer sheet and a multilayer sheet as well as films described above. In the present specification, a difference between a sheet and a film is not always distinct, but it simply has an general image that thickness of a film is smaller than that of a sheet.

When the olefin-based resin composition of the present invention is used for covering films for an agricultural house, tunnel or the like, such films preferably has a thickness of from about 0.01 to about 1 mm, more preferably from about 0.02 to 0.4 mm, particularly from about 0.03 to about 0.2 mm from the viewpoints of their strength, processability in jointing and workability in covering.

Into the agricultural covering films comprising the olefin-based resin composition of the present invention may be incorporated light stabilizers in order to improve weatherability of the films. Among the light stabilizers, a hindered amine compound is preferred. Preferable examples of the hindered amine compound include ones having structural formulas disclosed in JP-A- 8-73667. Typically, examples thereof include ones available under the trade names of Tinuvin 622-LD, Chimasorb 944-LD, Hostavin N30, VP Sanduvor PR-31 and Tinuvin 123. These hindered amine compounds may be used either alone or in combination of two or more of them. Examples of a hindered amine compound-containing light stabilizer include compositions disclosed in JP-A- 63-286448 (for example, ones available from Ciba Specialty Chemicals Corp. under the trade names of Tinuvin 492 and Tinuvin 494).

When a hindered amine compound is incorporated in a film, its amount, based on the weight of the film, is usually in the range of from 0.02 to 5 % by weight, preferably from 0.01 to 2 % by weight, still more preferably from 0.5 to 2 % by weight from the viewpoints of both an effect on improvement of weatherability and suppression of blooming. When the light stabilizer is incorporated in a multilayer film, it may be incorporated in any layer of the multilayer film. When it is incorporated in two or more layers, each layer may contain it either in the same amount or in different amounts. From the viewpoint of the effect on improvement of weatherability, the light stabilizer is preferably used together with an ultraviolet absorber which is described below.

Into an agricultural covering film may be incorporated an ultraviolet absorber for the same purpose as that for the incorporation of the above-mentioned light stabilizer. Examples of the ultraviolet absorber include organic ultraviolet absorbers such a benzophenone-type ultraviolet absorber, a benzotriazole-type ultraviolet absorber, a benzoate-type ultraviolet absorber and a cyanoacrylate-type ultraviolet absorber, and inorganic ultraviolet absorbers including metal oxides, which are available, for example, from Nippon Inorganic Color & Chemical Co., Ltd. under the trade name of Ceriguard, such as cerium oxide, titanium oxide and zinc oxide. These ultraviolet absorbers may be used either alone

or in combination of two or more of them.

When the ultraviolet absorber is incorporated in a film, the amount thereof, based on the weight of the film, is usually in the range of from 0.01 to 3% by weight, preferably from 0.05 to 1% by weight from the viewpoint of both an effect on improvement of weatherability and suppression of blooming. When it is incorporated in two or more layers, each layer may contain it either in the same amount or in different amounts.

Into an agricultural covering film may be incorporated an anti-sticking agent in order to provide an anti-sticking property to the film. When the anti-sticking agent is incorporated, its amount is usually from 0.1 to 4% by weight, preferably from 0.5 to 3% by weight, still more preferably from 1.5 to 3% by weight, particularly preferably from 2.2 to 2.8% by weight, based on the weight of the film. In the case of a multilayer film, the anti-sticking agent may be incorporated in any layer. When it is incorporated in two or more layers, each layer may contain it either in the same amount or in different amounts.

Such an anti-sticking agent may be either solid or liquid at an ordinary temperature (23°C). The solid anti-sticking agent may be nonionic surfactants including sorbitan fatty acid ester-based surfactants such as sorbitan monostearate, sorbitan monopalmitate, sorbitan monobehenate and sorbitan monomontanate; glycerol fatty acid ester-based surfactants such as glycerol monolaurate, glycerol monopalmitate, glycerol monostearate, diglycerol distearate, triglycerol monostearate and triglycerol monomontanate; polyethylene glycol-based surfactants such as polyethylene glycol monopalmitate and polyethylene glycol monostearate; adducts of alkylene oxide to alkylphenol; organic acid esters of sorbitan/glycerol condensation products; amine-based surfactants including polyoxyethylene alkylamine compounds such as polyoxyethylene (2 mol) stearylamine, polyoxyethylene (2 mol) laurylamine and polyoxyethylene (4 mol) stearylamine ; fatty acid esters of polyoxyethylene alkylalmines such as polyoxyethylene (2 mol) stearylamine monostearate, polyoxyethylene (2 mol) stearylamine distearate, polyoxyethylene (4 mol) stearylamine monostearate, polyoxyethylene (4 mol) stearylamine distearate, polyoxyethylene (8 mol) stearylamine monostearate, polyoxyethylene (2 mol) stearylamine monobehenate and polyoxyethylene (2 mol) laurylamine stearate; and fatty acid amides of polyoxyethylene alkylamine compounds such as polyoxyethylene (2 mol) stearic acid amide.

Further, since the incorporation, into a film, of an anti-sticking agent which is in a liquid state at an ordinary temperature may prevent the film from being deteriorated in its light permeability during its storage or extension, the incorporation of at least one kind of anti-sticking agent which is in the liquid state at an ordinary temperature is effective.

Examples of the anti-sticking agent which is in the liquid state include glycerol fatty acid esters such as glycerol monooleate, diglycerol monooleate, diglycerol sesquioleate, tetraglycerol monooleate, hexaglycerol monooleate, tetraglycerol trioleate, hexaglycerol pentaoleate, tetraglycerol monolaurate and hexaglycerol monolaurate; and sorbitan fatty acid esters such as sorbitan monooleate, sorbitan dioleate and sorbitan monolaurate. When such a liquid anti-sticking agent is incorporated to a film, its amount is usually in the range of from 0.2 to 3% by weight, preferably from 0.5 to 2% by weight, based on the weight of the film.

In order to maintain transparency of the film for a long time, an anti-sticking coat may be further provided at least on the inner surface of the film, which is the surface which will face the inside of a house.

Such an anti-sticking coat may be, for example, a coating film comprising an inorganic oxide sol such as colloidal silica and colloidal alumina, a coating film formed from a liquid mainly comprising a surfactant and a coating film formed from a liquid mainly comprising a hydrophilic resin, and a coating film being mainly composed of the hydrophilic resin. Examples of the hydrophilic resin include polyvinyl alcohol, polysaccharide and polyacrylic acid. The method for coating may be either a so-called coating method or a method wherein a film being mainly composed of the hydrophilic resin is formed and then it is laminated on the surface of the film (the base film).

In addition, an anti-fogging agent may further be incorporated in the film (the base film) in order to provide an anti-fogging property to the film. Examples of the anti-fogging agent include fluorine compounds having a perfluoroalkyl group, a ω-hydrofluoroalkyl group or the like (particularly, fluorine-containing surfactants) and silicone-type compounds having an alkylsiloxane group (particularly silicone-type surfactants). When the anti-fogging agent is incorporated in the film, its amount is usually in the range of from 0.01 to 3% by weight, preferably from 0.02 to 1% by weight, based on the weight of the film. When the anti-fogging agent is incorporated in a multilayer film, the anti-fogging agent may be incorporated in any layer of the multilayer film. When it is incorporated in two or more layers, each layer may contain it either in the same amount or in different amounts.

If necessary, various stabilizers other than those described above such as a light stabilizer comprising a nickel-based compound, an antioxidant and a heat stabilizer and additives such as an anti-blocking agent, a lubricant, an anti-static agent and a pigment may be added to the agricultural covering film.

Furthermore, a near-infrared shielding agent may be incorporated in the agricultural covering film in order to lower the temperature inside the house in the daytime in a hot season. Such near-infrared shielding agents may be, for example, organic compounds disclosed in JP-A- 10-193522, e.g., nitroso compounds and their metal complexes, cyanine-type compounds, squarrium-type compounds, thiol-nickel complex salt-type compounds, phthalocyanine-type compounds, triallylmethane-type compounds, imonium-type compounds, diimonium-type compounds, naphthoquinone-type compounds, anthraquinone-type compounds, amino compounds and aminium salt-type compounds; and

inorganic compounds such as carbon black, antimony oxide, tin oxide doped with indium oxide, oxides and carbonates of metals of the group 4A, 5A or 6A of the periodic table of the elements, and boron compounds. When the near-infrared shielding agent is an inorganic compound or an organic pigment, the transparency of the film may be improved by reduction in a refraction index difference between the near-infrared shielding agent and the resin.

The additives mentioned above may be used either alone or in combination of two or more of them. When these additives are incorporated in a multilayer film, they may be incorporated in any layer of the multilayer film. When they are incorporated in two or more layers, each layer may contain them either in the same amount or in different amounts.

On the surface of the agricultural covering film, a coat comprising the near-infrared shielding agent may be provided. The method for coating may be, for example, a method in which a coating liquid comprising the near-infrared shielding agent and a water-soluble resin binder is applied to the film (the base film) and then dried.

Since the olefin-based resin composition of the present invention has excellent transparency, it is useful as a material for various formed products. For example, a film comprising the composition also has excellent transparency and therefore is useful as a covering film of e.g. an agricultural house, tunnel, curtain and mulch. The olefin-based resin composition of the present invention may also be used for signboards, translucent boards used for prevention of noise on expressways, window panes, glasses for automobiles, sunshine roofs, bottles and trays for drinks and foods, films for wrapping, for example.

## EXAMPLES

Examples of the present invention will be shown below, but the invention is not limited by the examples. All parts and percentages in the examples and comparative examples are by weight unless explicitly stated otherwise.

Testing methods used in the examples and comparative examples are as follows:

(1) Density of resin

A density of a resin was measured by the method provided in JIS K6760.

(2) Melt flow rate of resin

A melt flow rate of a resin material was measured by the method provided in JIS K6760. Measuring conditions included a load of 2.16 kg and a temperature of 190°C.

(3) Crystallinity of resin

A sample was heated at a heating rate of 10°C/minute by means of a differential scanning calorimeter (manufactured by Seiko Instruments Inc., model: DSC-220). An endothermic curve (a DSC chart) was recorded and the presence of a peak was checked.

(4) Internal haze

An internal haze, which is a measure of transparency, was determined by means of a digital haze meter (manufactured by Suga Test Instruments Co., Ltd.). The internal haze was obtained by filling a quarts cell with a solution of dimethyl phthalate, immersing a sample film therein and measuring a haze of the entire cell.

(5) Heat-retaining property (Radiation-shielding property)

[Radiation transmitting index]

The radiation transmitting index at 23°C was determined by the following method by means of an infrared spectrophotometer (Model 1640 FTIR, manufactured by Perkin-Elmer Corp.)

Measurement of the infrared spectrum of a film (100 μm thick) was conducted in the wavenumber range of from 400 to 4000 $cm^{-1}$ at 23°C by a transmission method, providing a transmittance, $T(\nu)$%, at a wavenumber, $\nu$.

On the other hand, an intensity, $e(\nu)$, of a black body radiation spectrum at the wavenumber of $\nu$ at 23°C was calculated in accordance with the following formula (3) derived from the Planck's law. The product of the intensity, $e(\nu)$, of the black-body radiation spectrum and the transmittance, $T(\nu)$, is a black-body transmitting intensity, $f(\nu)$. See formula (4).

A radiation transmitting energy, F, is calculated by integration of the radiation transmitting intensity, $f(\nu)$, in

the wavenumber range of from 400 to 4000 $cm^{-1}$. A black-body radiation energy, E, is calculated by integration of the intensity, e(ν), of the black-body radiation spectrum in the wavenumber range of from 400 to 4000 $cm^{-1}$. The radiation transmitting index, G, is defined by the formula: G = 100 × F / E . In an actual integration, the above-mentioned wavenumber range was divided into ranges 2 $cm^{-1}$ wide and the integration was carried out for each divided range by trapezoid approximation. The smaller the radiation transmitting index, the better the heat retaining property of the film.

$$e(\nu) = (A/\lambda^5) / \{\exp(B/(\lambda \times T))^{-1}\} \quad (3)$$

In the formula (3),

A (first radiation constant) = $2\pi hC^2 = 3.74 \times 10^{-16}$ (W • $m^2$)
B (second radiation constant) = hC / k = 0.01439 (m • K)

wherein T (K) is an absolute temperature, λ (cm) is a wavelength whose reciprocal is a wavenumber ν, h is the Planck's constant, C is the speed of light and k is the Boltzmann's constant.

$$f(\nu) = e(\nu) \times T(\nu) / 100 \quad (4)$$

Examples 1 to 6

[Preparation of copolymer (A)]

Into a 5000 ml autoclave, the inside of which had been replaced with argon, 3500 ml of styrene and 1650 ml of dehydrated toluene were placed, and then 1.2 MPa of ethylene was fed. To the mixture, 2.0 ml of a heptane solution of triisobutylaluminum (manufactured by Tosoh Akzo Corp., 1 mol/l), and a mixture prepared by dissolving 4.6 mg of isopropylidene(cyclopentadienyl)(3-tert-butyl-5-methyl-2-phenoxy)titanium dichloride in 6 ml of dehydrated toluene and a mixture prepared by dissolving 22.4 mg of N,N-dimethylanilinium tetrakis(pentafluorophenyl)borate in 28 ml of dehydrated toluene were added. The reaction solution was stirred at 60°C for 1 hour. Next, the reaction solution was poured into a mixture of 15 ml of hydrochloric acid (12N) and 3000 ml of methanol and then a white solid precipitated was collected by filtration. The solid was washed with methanol and dried under reduced pressure to obtain 100.4 g of an ethylene/styrene copolymer. The copolymer had a volume-based average molecular weight of 297,000, a molecular weight distribution (a weight-average molecular weight / a volume-based average molecular weight) of 2.21, a glass transition temperature of -10°C and a styrene unit content of 26 mol%. A ratio of the area of the peak appearing in the range of from 34.0 ppm to 36.0 ppm in a $^{13}C$-NMR spectrum to that of the peak appearing in the range of from 36.0 ppm to 38.0 ppm was 0.06 No peak was observed in the DSC chart and the copolymer substantially had no crystallinity. The maximum value of the loss tangent (tan δ) of this copolymer was 1.40.

[Preparation of olefin-based resin compound and film formation]

To the ethylene/styrene copolymer obtained above, 0.1% of Irganox 1010 (manufactured by Ciba Specialty Chemicals Corp.) as a heat stabilizer, 0.4% of Tinuvin 622 (manufactured by Ciba Specialty Chemicals Corp.) and 0.2% of Chimasorb 944 (manufactured by Ciba Specialty Chemicals Corp.) were added and a particle of an inorganic compound (lithium aluminum complex hydroxide, available from Mizusawa Industrial Chemicals, Ltd., volume-based average particle diameter = 0.4 μm, specific surface area measured by the BET method = 20 $m^2$/g) was further added in the amount given in Table 1. The mixture was kneaded in a Laboplastomill at 150°C for 5 minutes. The resulting kneaded material was spread by means of a press to obtain a film having thickness of 100 μm.

The evaluation results of the resulting film are shown in Table 1.

Comparative Example 1

A film was made in the same manner as in Example 1 except for using an ethylene/vinyl acetate copolymer (trade name: Evatate H2031, vinyl acetate unit content: 19%, manufactured by Sumitomo Chemical Co., Ltd.) instead of the copolymer used in Example 1. The evaluation results of the resulting film are shown in Table 1.

Comparative Example 2

A film was made in the same manner as in Example 1 except for using an ethylene/vinyl acetate copolymer (trade name: Evatate H2031) instead of the copolymer used in Example 4. The evaluation results of the resulting film

are shown in Table 1.

Table 1

| | Examples | | | | | | Comparative Examples | |
|---|---|---|---|---|---|---|---|---|
| | 1 | 2 | 3 | 4 | 5 | 6 | 1 | 2 |
| Amount of inorganic compound particle* (parts) | 11.1 | 25.0 | 42.9 | 66.7 | 100 | 150 | 11.1 | 66.7 |
| Internal haze (%) | 3.4 | 3.0 | 3.6 | 3.8 | 4.3 | 4.1 | 13.4 | 52.3 |
| Radiation transmitting index | 16.5 | 8.8 | 5.1 | 3.0 | 2.0 | 1.6 | 15.4 | 2.9 |

Amount of inorganic compound particle*: Parts per 100 parts by weight of a copolymer.

Examples 7 to 11

Films are made in the same manner as in Example 4 except for using particles of compounds given in Table 2 instead of the particle of lithium aluminum complex hydroxide as the inorganic compound particle.

Table 2

| | Example 7 | Example 8 | Example 9 | Example 10 | Example 11 |
|---|---|---|---|---|---|
| Inorganic compound particle (parts) | H1 (66.7) | H2 (66.7) | H3 (66.7) | H4 (66.7) | H1 (33.3)<br>H4 (33.3) |

H1: Particle of hydrotalcite compound (trade name: DHT-4A, manufactured by Kyowa Chemical Industry Co. Ltd.; volume-based average particle diameter = 0.3 µm; specific surface area measured by the BET method = 18 $m^2/g$; $Mg^{2+}_{0.69}Al^{3+}_{0.31}(OH^-)_2 \cdot (CO_3^{2-})_{0.155} \cdot 0.54H_2O$)
H2: Particle of zinc oxide-based compound (trade name: SZ60, manufactured by Nippon Inorganic Color & Chemical Co., Ltd.; volume-based average particle diameter = 6 µm; specific surface area measured by the BET method = 12 $m^2/g$; $SiO_2$-coating ZnO)
H3: Particle of talc (trade name: Micronwhite 5000S; volume-based average particle diameter = 5 µm; specific surface area measured by the BET method = 15 $m^2/g$; $Mg_3SiO_{10}(OH)_2$)
H4: Particle of alumina silica (trade name: Silton JC30, manufactured by Mizusawa Industrial Chemicals, Ltd.; volume-based average particle diameter = 3 µm; specific surface area measured by the BET method = 18 $m^2/g$; Sodium calcium alumino silicate)

Example 12

A three-layered tube (a substrate) which has a first layer, a third layer and a second layer sandwiched by the first and third layers are obtained. The first layer, the second layer and the third layer are, respectively, the inner layer, the intermediate layer and the outer layer of the tube. A composition of each layer is given in Table 3. Each value put in parentheses after a symbol indicating a kind of an ingredient is percentage of the amount of each ingredient based on the total amount of the ingredients contained in the layer in which the ingredient is present. First, ingredients to be contained in each layer are kneaded at 150°C for five minutes in a Banbury mixer. Then the mixtures are granulated by a granulator to obtain resin compositions for forming the layers in the form of pellets. A three-layered tube is formed by means of a three-layer inflation film forming machine using resin composition pellets or resin pellets for each layer so that the thickness of each layer becomes one given in Table 3. When the tube is cut along its longitudinal direction, a film which has excellent properties as an agricultural covering film is obtained.

Example 13

A three-layer tube is made in the same manner as in Example 12 except for setting a composition of each layer as shown in Table 3. The tube is cut along its longitudinal direction to form a film (a substrate), the surface of the third layer of which is then subjected to corona treatment.

Alumina sol (manufactured by Nissan Chemical Industries, Ltd.; trade name: Aluminasol 520; solid content: 20%), colloidal silica (manufactured by Nissan Chemical Industries, Ltd.; trade name: Snowtex 20; solid content: 20%), sodium dodecylbenzenesulfonate (manufactured by Kao Corp.; trade name: Neopelex F25), sodium decanate (manufactured by Nacalai tesque Ltd.) and water are mixed so that a solid content of each ingredient becomes 1.6%, 0.4%, 0.08% and 0.08% to produce a coating liquid. To the surface of the third layer of the substrate which has been subjected to corona treatment in advance, the coating liquid is applied so that a solid thickness becomes about 0.2 g/m$^2$ and dried at room temperature to form an anti-sticking layer on the third layer to obtain a multilayer film which has excellent properties as an agricultural covering film.

Table 3

| Layer | | Example 12 | Example 13 |
|---|---|---|---|
| First layer | Resin | A2 / A8 [90 / 10] | A2 / A3 [90 / 10] |
| | Heat stabilizer | E1 (0.05) / E2 (0.15) | E1 (0.05) / E2 (0.15) |
| | Weather resistant agent | F1 (0.2) / F2 (0.4) | F1 (0.2) / F2 (0.4) |
| | Ultraviolet absorber | G1 (0.24) | G1 (0.24) |
| | Lubricant | K1 (0.06) | K1 (0.06) |
| | Anti-fogging agent | I1 (0.1) | |
| | Anti-sticking agent | H1 (0.4) / H2 (0.6) | H1 (0.4) |
| | Layer thickness (μm) | 20 | 20 |
| Second layer | Resin | A4 | A4 |
| | Heat stabilizer | E3 (0.08) / E4 (0.2) | E3 (0.08) / E4 (0.2) |
| | Weather resistant agent | F3 (0.6) | F3 (0.6) |
| | Anti-fogging agent | I1 (0.1) | |
| | Anti-sticking agent | H1 (1.0) / F2 (1.5) | H1 (1.0) |
| | Layer thickness (μm) | 60 | 60 |
| Third layer | Resin | A1 | A1 |
| | Heat stabilizer | E1 (0.05) / E2 (0.15) | E1 (0.05) / E2 (0.15) |
| | Weather resistant agent | F1 (0.2) / F2 (0.4) | F1 (0.2) / F2 (0.4) |
| | Radiation shielding agent | J1 (40) | J1 (40) |
| | Lubricant | K1 (0.06) | |
| | Anti-fogging agent | I1 (0.1) | |
| | Anti-sticking agent | H1 (0.4) / H2 (0.6) | H1 (0.4) |
| | Layer thickness (μm) | 20 | 20 |
| Total layer thickness (μm) | | 100 | 100 |

A1: Ethylene/alkenyl aromatic hydrocarbon copolymer (volume-based average molecular weight: 297,000; molecular weight distribution (weight-average molecular weight/volume-based average molecular weight): 2.21; glass transition point: -10°C; styrene unit content: 26 mol%)

A2: Sumikathene E, FV403-0 manufactured by Sumitomo Chemical Co., Ltd.)

A3: Low-density polyethylene (trade name: Sumikathene F200; density: 0.923 g/cm$^3$; manufactured by Sumitomo Chemical Co., Ltd.)

A4: Ethylene/vinyl acetate copolymer (trade name: Evatate H2031; vinyl acetate unit content: 19%; manufactured by Sumitomo Chemical Co., Ltd.)

E1: Trade name: Sumilizer BP76, manufactured by Sumitomo Chemical Co., Ltd.

E2: Trade name: Irgafos P168, manufactured by Ciba Specialty Chemicals Corp.

E3: Trade name: Sumilizer BHT, manufactured by Sumitomo Chemical Co., Ltd.

E4: Trade name: Irganox 1010, manufactured by Ciba Specialty Chemicals Corp.

F1: Hindered amine compound (trade name: Chimasorb 944LD, manufactured by Ciba Specialty Chemicals Corp.)

F2: Hindered amine compound (trade name: Tinuvin 622LD, manufactured by Ciba Specialty Chemicals Corp.)

F3: Hindered amine compound (trade name: Tinuvin 462, manufactured by Ciba Specialty Chemicals Corp.)

G1: Trade name: Sumisorb 130, manufactured by Sumitomo Chemical Co., Ltd.

H1: Diglycerol sesquioleate

H2: Mixture of monoglycerol monostearate/diglycerol sesquistearate with a weight ratio of 3/7

I1: Fluorine-containing surfactant (trade name: Unidyne DS403, manufactured by Daikin Industries, Ltd.)

J1: Particle of lithium aluminum complex hydroxide (trade name: Mizukalac; manufactured by Mizusawa Industrial Chemicals, Ltd.;

volume-based average particle diameter = 0.4 μm; specific surface area measured by the BET method = 20 $m^2/g$; $Li^{+}_{2}Al^{3+}_{4}(OH^{-})_{12} \cdot (CO_3^{2-}) \cdot 3H_2O$

K1: Ethylenebisoleic amide

**Claims**

1. An olefin-based resin composition comprising an olefin-based resin and an inorganic compound particle, wherein the olefin-based resin is a copolymer of ethylene and/or an α-olefin and an alkenyl aromatic hydrocarbon.

2. The olefin-based resin composition according to Claim 1, wherein the inorganic compound particle has a volume-based average particle diameter of not greater than 10 μm.

3. The olefin-based resin composition according to claim 1 or 2, wherein the inorganic compound particle has a specific surface area measured by the BET method of from 1 to 30 $m^2$/g.

4. The olefin-based resin composition according to any one of claims 1 to 3, wherein the inorganic compound particle is an inorganic compound particle comprising at least one atom selected from Si, Al, Mg, Ca, Zn, Ti, Ce and Zr.

5. The olefin-based resin composition according to any one of claims 1 to 4 which contains from 10 to 400 parts by weight of the inorganic compound particle per 100 parts by weight of the copolymer.

6. The olefin-based resin composition according to any one of claims 1 to 5, wherein the copolymer comprises at least one copolymer with any one of the following characteristics:

   (a) substantially having no crystallinity;
   (b) substantially showing no peak in an endothermic curve (a DSC chart) obtained by means of a differential scanning calorimeter; and
   (c) having a ratio of the area of the peak appearing in the range of from 34.0 ppm to 36.0 ppm in a $^{13}$C-NMR spectrum to that of the peak appearing in the range of from 36.0 ppm to 38.0 ppm of from 0.01 to 0.25.

7. The olefin-based resin composition according to any one of claims 1 to 6, wherein the copolymer comprises at least one copolymer whose repeating units derived from the alkenyl aromatic hydrocarbon substantially have no stereoregularity.

8. The olefin-based resin composition according to any one of claims 1 to 7, wherein the copolymer comprises at least one copolymer which has a loss tangent (tan δ) whose maximum value, X, and a fraction, S (mol%), of repeating units derived from the alkenyl aromatic hydrocarbons satisfy formula (1):

$$X > -0.0005 \times S^2 + 0.06 \times S + 0.04 \quad (1)$$

   wherein tan δ indicates a ratio (E"/E') of a loss elastic modulus (E") to a storing elastic modulus (E') obtained by the measurement of solid dynamic viscoelasticity under the conditions of a frequency at 5 Hz, a rate of temperature elevation at 2°C/minute and a displacement amplitude at 10 μm using a 20 mm × 3.0 mm × 0.3 mm pressed sheet.

9. A formed product comprising the olefin-based resin composition of any one of claims 1 to 8.

10. A film or sheet having at least one layer comprising the olefin-based resin composition of any one of claims 1 to 8.

European Patent Office

# EUROPEAN SEARCH REPORT

Application Number
EP 00 11 6398

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 00449 A (DOW CHEMICAL CO) 7 January 1999 (1999-01-07)<br>* abstract *<br>* page 4, line 14 - page 5, line 10 *<br>* page 6, line 1 - line 3 *<br>* page 7, line 27 - line 33 *<br>* page 8, line 17 - page 9, line 17 *<br>* page 10, line 3 - line 7 *<br>* page 10, line 17 - line 24 *<br>* page 18, line 3 - line 15 *<br>* page 19, line 31 - page 20, line 7 *<br>* examples 49-51,53,54 *<br>* claims 1,3,6,9,10 *<br>--- | 1-7,9,10 | C08K3/00<br>C08L23/08 |
| X | EP 0 842 978 A (KURARAY CO) 20 May 1998 (1998-05-20)<br>* abstract *<br>* page 4, line 23 - line 36 *<br>* page 4, line 39 - line 47 *<br>* page 5, line 32 - line 36 *<br>* page 5, line 47 - line 49 *<br>* page 8, line 1 - line 27 *<br>* page 9, line 2 - line 4 *<br>* page 9, line 45 - line 49 *<br>* claims 1,8-10,17 *<br>--- | 1,2,4-7,<br>9,10 | TECHNICAL FIELDS SEARCHED (Int.Cl.7)<br>C08K<br>A01G<br>C08J<br>C08L |
| X | WO 98 29480 A (KIMBERLY CLARK CO) 9 July 1998 (1998-07-09)<br>* abstract *<br>* page 3, line 14 - line 22 *<br>* page 5, line 1 - line 12 *<br>* page 6, line 9 - line 31 *<br>* page 7, line 1 - line 10 *<br>* page 7, line 19 - line 24 *<br>* page 9, line 22 - line 36 *<br>* page 10, line 9 - line 18 *<br>* claims 1,3,4,6 *<br>----- | 1-7,9,10 | |

The present search report has been drawn up for all claims

| Place of search | Date of completion of the search | Examiner |
|---|---|---|
| THE HAGUE | 20 October 2000 | Denis, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 11 6398

This annex lists the patent family members relating to the patent documents cited in the above-mentioned European search report. The members are as contained in the European Patent Office EDP file on
The European Patent Office is in no way liable for these particulars which are merely given for the purpose of information.

20-10-2000

| Patent document cited in search report | Publication date | Patent family member(s) | Publication date |
|---|---|---|---|
| WO 9900449 A | 07-01-1999 | US 5973049 A | 26-10-1999 |
| | | AU 8067798 A | 19-01-1999 |
| | | CN 1264401 T | 23-08-2000 |
| | | EP 0991706 A | 12-04-2000 |
| | | NO 996465 A | 23-02-2000 |
| | | US 6103803 A | 15-08-2000 |
| EP 0842978 A | 20-05-1998 | CN 1184827 A | 17-06-1998 |
| | | JP 10204229 A | 04-08-1998 |
| | | JP 10306180 A | 17-11-1998 |
| WO 9829480 A | 09-07-1998 | US 6015764 A | 18-01-2000 |
| | | US 6111163 A | 29-08-2000 |
| | | AU 5610998 A | 31-07-1998 |
| | | BR 9714180 A | 29-02-2000 |
| | | CN 1247545 A | 15-03-2000 |
| | | EP 0948556 A | 13-10-1999 |

EPO FORM P0459

For more details about this annex : see Official Journal of the European Patent Office, No. 12/82